# EUROPEAN PATENT APPLICATION

(11) **EP 4 603 255 A1**
(43) Date of publication of application: **20.08.2025**
(21) Application number: 24157485.4
(22) Date of filing: 13.02.2024
(51) Int. Cl.: B29C 48/00, B29C 48/29, B29C 64/00, B29C 64/106, C08G 18/32, C08G 18/38, C08G 18/42, C08G 18/44, C08G 18/76

(54) **SYSTEM, METHOD, KIT AND FORMULATIONS FOR PRINTING ELASTIC THREE-DIMENSIONAL OBJECTS COMPRISING THERMOSET POLYURETHANE MATERIALS HAVING A HIGH RESISTANCE TO LOSS OF ELASTICITY**

(71) Applicant: Chromatic 3D Materials Inc., Golden Valley, MN 55427 (US)
(72) Inventor: Lawin, Laurie, New Brighton, 55112 (US); Sowins, Jonathan, Minneapolis, 55409 (US)
(74) Representative: Lelkes, Robert

(57) **Abstract**

Systems, methods, kits of parts, and extrudable partially-reacted co-reactive compositions are disclosed for making thermoset polyurethane parts made via three-dimensional printing. The reactive components used to make the polyurethane thermoset include a first reactive component comprising at least one polyisocyanate prepolymer, a second reactive component comprising at least one polyol prepolymer, and a third reactive component comprising at least one polyol compound, wherein the at least one polyol compound has, per molecule, less than two urethane groups and (a) at least one ester group and at least three hydroxy groups per molecule or (b) at least one carbonate group and at least two hydroxy groups per molecule. This combination of reactive components improves resistance to loss of elasticity due to compression set and/or hydrolysis or exposure to chemicals, solvents or heat.

## Description

### BACKGROUND OF THE INVENTION

### Field of the invention

The present invention relates to systems, methods, kits and formulations for printing three-dimensional objects comprising a thermoset polyurethane material.

### Technical background

Systems, methods and formulations for printing three-dimensional objects comprising a thermoset polyurethane material are known. Examples include the systems, methods and formulations disclosed in U.S. patent nos. 10,639,842, 11,065,816, 11,254,047, and 11,724,458. A challenge associated with such systems, methods and formulations is obtaining elastic three-dimensional products via three-dimensional printing having a high resistance to loss of elasticity, such as through exposure to extended time periods of compression, exposure to hydrolytic conditions, chemicals or solvents, and/or exposure to harsh conditions such as high temperatures, particularly when a robust product having a reliable low elastic modulus is desired.

Loss of elasticity through exposure to compression over an extended period of time is known as compression set. Compression set is the permanent deformation of an elastic material remaining after compressing the material and removing the force of compression. When measured under standardized conditions, such as those prescribed by the ASTM D395 Standard Test Method for Rubber Property - Compression Set, the compression set of materials may be compared and specified according to Compression Set A or Compression Set B. Compression set is most commonly specified in the industry as Compression Set B. It is generally desired that the compression set measurement value is low.

According to ASTM D395 Compression Set B, an elastic specimen having a defined shape is compressed to 75% of its original height for a set time and at a set temperature. The value determined via this method is the percentage of specimen deflection relative to the original height of the specimen after it has been left in a normal (uncompressed) condition for 30 minutes.

Many end uses for elastic materials require a low compression set, such as a low Compression Set B value, to maintain contact between the elastic material and other components under varying loads, such as when they are used as sealing elements, or require low compression set to provide a consistent response to compressive forces, such as when used as a cushioning element. Loss of resiliency (memory) of a seal or gasket made with a material having a compression set that is too high increases the risk of a leak when the load on the seal or gasket changes from high compressive force to a lower compressive force and a cushion made with a material having a compression set that is too high will lose some of its cushioning and shock isolation properties after it is compressed for an extended period of time.

Another challenge associated with known systems, methods, and formulations for making elastic thermoset products via three-dimensional printing is obtaining a high resistance to loss of elasticity due to degradation of the thermoset product, such as through hydrolysis, exposure to chemicals, solvents, high temperatures and/or harsh environments, particularly when combined with obtaining and maintaining a low elastic modulus, such as for the above-described applications requiring sealing and/or cushioning, and low compression set.

Elastic thermoset materials have been available as casted and injection molded parts. Such parts are produced in casting or injection molding machines. Such machines must be designed and configured to produce desired products. Expensive molds must be designed and made for making each product. Any desired change in the shape of an injection molded product requires the fabrication of a new mold.

Due to the initial sunk costs in designing and making the molding equipment and the inherent limitations on the types of products that can economically be made with such equipment, molding has been used for making large numbers of products such as seals, gaskets and the like having a specified shape, size and composition. To ensure that a sufficient number of such products are available on demand, such products are made in large lots which must be catalogued and stored, often in multiple locations, for an extended period of time. A well-developed logistic infrastructure is required to keep track of the number and location of such parts and to deliver them to where they are needed. Due to the unpredictability of the number of such products needed, substantial numbers of such parts are never put into service and, once they become obsolete, they must be disposed of, resulting in considerable amounts of wasted product and waste disposal issues.

Moreover, the range of thermosettable formulations that can be used in a specific molding device is generally limited to those having a sufficiently low viscosity to completely fill the void in the mold followed by a rapid increase in viscosity while having a generally low tolerance for contraction of the formulation while curing. Production of a molded product integrating different types of materials can be difficult or not commercially viable. Moreover, the shape of injection molded products is generally restricted by the shape of the mold required for complete filling of the mold with thermosettable material and release of the thermoset product from the mold.

Three-dimensional printing of thermosettable materials allows for the production of products having various shapes and sizes on demand without having to invest in molds and molding equipment and they offer a wider range of product design options. However, the formulations used for three-dimensional printing must not only be extrudable while partially reacted, but must also be printable post extrusion. This requirement is not consistent with the requirements for commercial production via molding identified above. Due to this difference in performance, materials formulated for molding are generally not considered to be suitable for three-dimensional printing.

Providing formulations capable of being printed in a partially-cured state post extrusion during three-dimensional printing while meeting industrial low compression set, resistance to degradation, and elastic modulus requirements post-cure has thus remained unresolved by the state of the art. This problem, and other problems, are solved by this invention as described below.

### SUMMARY OF THE INVENTION

In one aspect, the present invention solves the foregoing problems by providing a system for printing a three-dimensional object comprising a thermoset polyurethane material comprising:
a mixing chamber for mixing at least two reactive components,
a first pump in fluid communication with the mixing chamber for pumping a first reactive component into the mixing chamber,
a second pump in fluid communication with the mixing chamber for pumping a second reactive component into the mixing chamber, wherein the second reactive component is capable of reacting with the first reactive component, and
a downwardly-oriented channel in fluid communication with the mixing chamber for extruding a partially-reacted mixture of the first reactive component and the second reactive component formed in the mixing chamber,
wherein the system comprises a first reactive component, a second reactive component, and a third reactive component,
wherein
   the first reactive component comprises at least one polyisocyanate prepolymer, wherein the first reactive component is provided to the first pump, and
   the second reactive component comprises at least one polyol prepolymer, wherein the second reactive composition is provided to the second pump, and
   the third reactive component comprises at least one polyol compound, and
   the third reactive component is either (a) present in admixture with the second reactive component or (b) introduced into the mixing chamber via a separate pump in fluid communication with the mixing chamber, and
   the at least one polyisocyanate prepolymer and the at least one polyol prepolymer each independently comprises at least two urethane groups per molecule, and
   the at least one polyol compound has, per molecule, less than two urethane groups and (a) at least one ester group and at least three hydroxy groups or (b) at least one carbonate group and at least two hydroxy groups.

In another aspect, the present invention solves the above problems by providing a method for printing a three-dimensional object comprising a thermoset polyurethane material comprising:
(a) Mixing a first reactive component with a second reactive component and a third reactive component to form a partially reacted mixture and
(b) Extruding the partially reacted mixture formed in step (a) through a downwardly-oriented channel onto a substrate while causing relative movement between the channel and the extruded partially reacted mixture deposited on the substrate to form a three-dimensional object,
wherein
the first reactive component comprises at least one polyisocyanate prepolymer, and
the second reactive component comprises at least one polyol prepolymer, and
the third reactive component comprises at least one polyol compound, and
the at least one polyisocyanate prepolymer and the at least one polyol prepolymer each independently comprises at least two urethane groups per molecule, and
the at least one polyol compound has, per molecule, less than two urethane groups and (a) at least one ester moiety and at least three hydroxy groups or (b) at least one carbonate group and at least two hydroxy groups.

In another aspect, the present invention solved the foregoing problems by providing a kit of parts for use in a method for printing a three-dimensional object comprising a thermoset polyurethane material via reactive extrusion comprising:
(1) A first container containing a first composition comprising at least one polyisocyanate prepolymer and
(2) A second container containing a second composition comprising (A) at least one polyol prepolymer and (B) at least one polyol compound,
wherein
the at least one polyisocyanate prepolymer and the at least one polyol prepolymer each independently comprises at least two urethane groups per molecule and
the at least one polyol compound has, per molecule, less than two urethane groups and (a) at least one ester group and at least three hydroxy groups or (b) at least one carbonate group and at least two hydroxy groups.

In yet a further aspect, the present invention solves the foregoing problems by providing an extrudable partially-reacted co-reactive composition in a downwardly-oriented channel of a printer for printing a three-dimensional object comprising a thermoset polyurethane material comprising:
(a) at least one polyisocyanate prepolymer;
(b) at least one polyol prepolymer; and
(c) at least one polyol compound;
wherein
the at least one polyisocyanate prepolymer and the at least one polyol prepolymer each independently comprises at least two urethane groups per molecule and
the at least one polyol compound has, per molecule, less than two urethane groups and (a) at least one ester group and at least three hydroxy groups or (b) at least one carbonate group and at least two hydroxy groups.

A further aspect of the present invention is a three-dimensional object obtainable, or made, using the foregoing system, method, kit of parts or extrudable partially-reacted co-reactive composition located in a downwardly-oriented channel of a printer for printing a three-dimensional object, wherein the three-dimensional object comprises a cured polyurethane having ester moieties and carbonate moieties.

### DETAILED DESCRIPTION OF THE INVENTION

The system, method, kit and reactive composition according to this invention each comprises a first, second, and third reactive component. The first reactive component and the second reactive component are capable of reacting with each other directly and/or along with the third reactive component and/or one or more additional optional reactive components capable of reacting with the first reactive component, such as one or more additional chain extenders and/or crosslinking agents. The first reactive component and the second reactive component are capable of reacting directly with each other.

The expression, "polyisocyanate prepolymer" refers to a prepolymer having at least two isocyanate groups and at least two urethane linking groups, wherein each isocyanate group is capable of reacting with an hydroxy group of a compound having an hydroxy group to form a another urethane linking group. The expression "polyisocyanate compound" refers to a compound having at least two isocyanate groups and less than two urethane linking groups, wherein each isocyanate group is capable of reacting with an hydroxy group of a compound having an hydroxy group to form a urethane linking group.

The expression, "polyol prepolymer" refers to a prepolymer having at least two hydroxy groups and at least two urethane linking groups, wherein each hydroxy group is capable of reacting with an isocyanate group of a compound having an isocyanate group to form an additional urethane linking group. The expression "polyol compound" refers to a compound having at least two hydroxy groups and less than two urethane linking groups, wherein each hydroxy group is capable of reacting with an isocyanate group of a compound having an isocyanate group to form a urethane linking group.

As used herein, the terms "molecular weight" and "Daltons", unless defined otherwise, refer to the theoretical molecular weight in grams per mole. When applied to materials in bulk, the term "molecular weight" may optionally refer to "weight average molecular weight" or "number average molecular weight". When applied to non-polymeric compounds in bulk, the term "molecular weight" preferably refers to number average molecular weight and when applied to polymers in bulk, the term "molecular weight" preferably refers to weight average molecular weight.

### First and second reactive components

The first reactive component comprises at least one polyisocyanate prepolymer and the second reactive component comprises at least one polyol prepolymer. The polyisocyanate prepolymers and the polyol prepolymers are copolymers comprising units derived from at least one polyisocyanate compound and units derived from at least one polyol compound. The at least one polyisocyanate compound is preferably a diisocyanate compound and the at least one polyol compound is preferably a diol compound. The polyisocyanate prepolymers are preferably isocyanate-terminated and the polyol prepolymers are preferably hydroxy-terminated.

In a preferred embodiment, the at least one polyol compound comprises at least one, preferably at least two, ester groups, at least one, preferably at least two, carbonate groups or both ester groups and carbonate groups. The polyol compound may, in addition to at least one ester group or at least one carbonate group, comprise ether groups. The ester groups and carbonate groups are preferably aliphatic or cycloaliphatic ester groups and aliphatic or cycloaliphatic carbonate groups.

The prepolymers are made by reacting one or more polyisocyanate compounds with one or more polyol compounds. The polyisocyanate prepolymer is made by reacting the polyol compound(s) with sufficient polyisocyanate compound(s) to produce a prepolymer having reactive isocyanate functionality, wherein the ratio of equivalents of isocyanate groups to hydroxyl groups is greater than 1:1. The polyol prepolymer is made by reacting the polyisocyanate compound(s) with sufficient polyol compound(s)to produce a prepolymer having reactive hydroxyl group functionality, wherein the ratio of equivalents of hydroxyl groups to isocyanate groups is greater than 1:1.

Examples of polyisocyanate compounds that may be used to make the prepolymers include, but are not limited to, methylene diphenyl diisocyanate (MDI) and toluene diisocyanate (TDI). Examples of MDI include, but are not limited to, monomeric MDI, polymeric MDI, and isomers thereof. Examples of isomers of MDI having the chemical formula C₁₅H₁₀N₂O₂ include, but are not limited to, 2,2'-MDI, 2,4'-MDI, and 4,4'-MDI, and mixtures thereof. An example of 4,4'-methylene diphenyl diisocyanate is Lupranate^{™} M and an example of a mixture of 2,4'-MDI, and 4,4'-MDI is Lupranate^{™} MI, each of which is available from BASF Wyandotte, Michigan, USA. Examples of isomers of TDI having the chemical formula C₉H₆N₂O₂ include, but are not limited to, 2,4-TDI and 2,6-TDI.

Other examples of polyisocyanate compounds include, but are not limited to, monomeric diisocyanates and blocked polyisocyanates. Examples of monomeric diisocyanates include, but are not limited to, hexamethylene diisocyanate (HDI), methylene dicyclohexyl diisocyanate or hydrogenated MDI (HMDI), and isophorone diisocyanate (IPDI). One example of a HDI is hexamethylene-1,6-diisocyanate. One example of a HMDI is dicyclohexylmethane-4,4'diisocyanate. Blocked polyisocyanates are typically based on HDI or IDPI. Examples of blocked polyisocyanates include, but are not limited to, HDI trimer, HDI biuret, HDI uretidione, and IPDI trimer.

Further examples of polyisocyanate compounds that can be used for producing the prepolymers described herein include, but are not limited to, aromatic diisocyanates, such as a mixture of 2,4- and 2,6-tolylene diisocyanates (TDI), naphthalene-1,5-diisocyanate (NDI), 3,3'-dimethyl-4,4'-biphenylene diisocyanate (TODI), crude TDI, polymethylenepolyphenyl isocyanurate, crude MDI, xylylene diisocyanate (XDI) and phenylene diisocyanate; aliphatic diisocyanates, such as 4,4'-methylene-biscyclohexyl diisocyanate (hydrogenated MDI), hexamethylene diisocyanate (HMDI), isophorone diisocyanate (IPDI) and cyclohexane diisocyanate (hydrogenated XDI); and modified products thereof, such as isocyanurates, carbodiimides and allophanamides.

The polyol compounds used to make the prepolymers preferably have at least 2 up to 4, more preferably up to 3, and yet more preferably 2, hydroxy groups, wherein the hydroxy groups are preferably terminal hydroxy groups. The hydroxy groups are preferably primary or secondary alcoholic hydroxy groups. The hydroxy groups are preferably terminal hydroxyl groups. In a preferred embodiment, the polyol compounds are oligomers. In a preferred embodiment, the polyol compounds are diol oligomers.

The polyol compounds preferably comprise groups selected from ester groups, carbonate groups and polyol groups. In a preferred embodiment, the polyol compounds comprise at least one, preferably at least two, even more preferably at least three, up to preferably five, more preferably up to four, and even more preferably 3, ester groups. In another preferred embodiment, the polyol compounds comprise at least one, preferably at least two, even more preferably at least three, up to preferably five, more preferably up to four, and even more preferably 3, carbonate groups. In a particularly preferred embodiment, the polyol compounds are polyol oligomers selected from polyester polyols, polycarbonate polyols and a mixture of polyester polyols and polycarbonate polyols.

The ester groups are preferably selected from aliphatic or cycloaliphatic ester groups and the carbonate groups are preferably selected from aliphatic or cycloaliphatic carbonate groups. The aliphatic group of the aliphatic ester group or aliphatic carbonate group preferably has at least 2, preferably at least 4, up to 8, more preferably up to 6, and even more preferably up to 5, carbon atoms in the main chain and has from zero up to 8, more preferably up to 6, and even more preferably up to 5, methyl group substituents, and the cycloaliphatic group of the cycloaliphatic ester group or cycloaliphatic carbonate group preferably has at least 4, more preferably at least 5, up to 12, more preferably up to 9, and even more preferably up to 6, carbon atoms in one or more cycloaliphatic rings, wherein the cycloaliphatic group may be monocyclic or a polycyclic ring system, wherein the polycyclic ring system is preferably a fused ring system or a bridged ring system, and wherein each ring member of the cycloaliphatic group may be unsubstituted or substituted with one or two methyl groups per carbon atom.

The polyol compound preferably has a molecular weight in the range of at least 200 Daltons, more preferably at least 500 Daltons, and even more preferably at least 800 Daltons, up to to 4,000 Daltons, more preferably up to 3,500 Daltons, and more preferably up to 2,500 Daltons, even more preferably up to 2,000 Daltons, and in some embodiments even more preferably up to 1,500 Daltons. The polyol compound may comprise dimers, trimers, oligomers and copolymers.

Preferred polyol compounds comprising ester groups include dimers, trimers, polymers and copolymers, wherein one or more monomer units comprise at least one ester group, such as polyester polyols. Polyester polyols may be obtained by condensation of one or more acids, or their anhydrides, and one or more compounds having at least two primary or secondary hydroxy groups. Specific examples include polyester polyols made from phthalic anhydride and di-ethylene glyol, phthalic anhydride and di-propylene glycol, adipic acid and butane diol, or succinic acid and butane or hexane diol.

Preferred polyol compounds comprising ester groups include lactones, such as valerolactone, butyrolactone, and caprolactone, particularly lactones selected from δ-valerolactone, γ-butyrolactone, ε-caprolactone, ε-methyl-ε-caprolactone and ξ-enantholactone and polymers and copolymers thereof. Examples of preferred polyester polyols include δ-valerolactone and/or ε-caprolactone. In a preferred embodiment, the ester groups are caprolactones such as ε-caprolactone and ε-methyl-ε-caprolactone, and polymers and copolymers thereof. Methods for making suitable polylactones are disclosed in Binczak et al., Recent Developments in Lactone Monomers and Polymer Synthesis and Application, MATERIALS (MDPI, 2021) 14, p. 2881, which is hereby incorporated herein by reference for its relevant disclosure. Specific examples of preferred polycaprolactone polyols are Placcel^{™} polylactone polyols available from Daicel Corp., Tokyo, Japan. Examples of polycaprolactone diols having the molecular formula H-[O-(CH₂)₅-CO-]ₙ-O-R-O-[-CO-(CH₂)₅-O]ₘ-H, wherein n and m represent positive integers include Placcel^{™} 210N, which has an average molecular weight of 1,000 g/mol, and Placcel^{™} 220N, which has an average molecular weight of 2000 g/mol. Preferred polyol compounds comprising carbonate groups include dimethyl carbonate (DMC), aliphatic carbonates such as diethyl carbonate and methyl ethyl carbonate, cyclic carbonates such as ethylene carbonate, propylene carbonate (4-methyl-1,3-dioxolan-2-one, trimethylene carbonate), butylene carbonate (4-ethyl-1,3-dioxolan-2-one, tetramethylene carbonate), and 5-methyl-1,3-dioxan-2-one, and aromatic carbonates such as diphenyl carbonate (DPC) and dimers, trimers, polymers and copolymers thereof. In certain embodiments, DMC, diethyl carbonate and ethylene carbonate, and dimers, trimers, polymers and copolymers thereof, are more preferred.

Preferred polyol compounds comprising carbonate groups include dimers, trimers, polymers and copolymers, wherein one or more monomer units comprise at least one carbonate group, such as polycarbonate polyols.

Suitable polycarbonate polyols may be obtained via condensation polymerization of at least one carbonate compound, such as one or more of the aforementioned carbonate compounds, and one or more organic diols preferably selected from aliphatic, cycloaliphatic, and aromatic diols, preferably via a condensation process using an appropriate catalyst. Preferred carbonates include dimethyl carbonate (DMC), aliphatic carbonates such as diethyl carbonate and methyl ethyl carbonate, and cyclic carbonates such as ethylene carbonate, propylene carbonate (4-methyl-1,3-dioxolan-2-one, trimethylene carbonate), butylene carbonate (4-ethyl-1,3-dioxolan-2-one, tetramethylene carbonate), and 5-methyl-1,3-dioxan-2-one, among which DMC, diethyl carbonate and ethylene carbonate are more preferred. The one or more aliphatic diols are preferably selected from 1,6-hexane diol, 1,4-butanediol, 2-methyl-1,3-propanediol and/or 2-methyl-1,3-pentanediol, or a combination of two or more of these diols, among which 2-methyl-1,3-propanediol and 2-methyl-1,3-pentanediol, alone or in combination with one or more of the other preferred aliphatic diols, are especially preferred. Preferred catalysts are known transesterification catalysts. An example of a suitable preparation method is described by Song et al., Preparation of polycarbonate diols (PCDLs) from dimethyl carbonate (DMC) and diols catalyzed by KNO3/γ-Al2O3, RSC ADV. (Royal Society of Chemistry, 2018) 8, pp. 35014-35022, which is hereby incorporated herein by reference for its relevant disclosure.

Aliphatic or cycloaliphatic polycarbonate polyols can also be obtained by copolymerization of carbon dioxide and epoxides to produce polycarbonate polyol resins using a polymerization system which includes 1) a metal complex as a transesterification catalyst and 2) a chain transfer, or initiating, agent having a plurality of sites capable of initiating polymer chains, such as disclosed in WO 2010/028362 A1, which is hereby incorporated herein by reference for its relevant disclosure. The chain transfer/initiating agent is preferably an aliphatic polyol.

Suitable aliphatic diol chain transfer/initiating agents for making polycarbonate diols include ,2- ethanediol, 1,2-propanediol, 1,3 -propanediol, 1,2-butanediol, 1,3-butanediol, 1,4- butanediol, 1,5-pentanediol, 2,2-dimethylpropane-l,3-diol, 2-butyl-2-ethylpropane-l,3-diol, 1,5-hexanediol, 1,6-hexanediol, 1,8-octanediol, 1,10-decanediol, 1,12-dodecanediol, 2,2,4,4-tetramethylcyclobutane-l,3-diol, 1,3-cyclopentanediol, 1,2-cyclohexanediol, 1,3- cyclohexanediol, 1,4- cyclohexanediol, 1,2-cyclohexanedimethanol, 1,3- cyclohexanedimethanol, 1,4-cyclohexanedimethanol, and 1,4-cyclohexanediethanol; polyalkylene glycols such as diethylene glycol, triethylene glycol, tetraethylene glycol, higher polyethylene glycol), such as dipropylene glycol, tripropylene glycol, and higher polypropylene glycol); and hydroxyl-terminated polyolefins, such as Krasol^{™} available from Sartomer Inc. and hydroxyl- terminated polyisobutylenes (PIB-diols and -triols) such as Polytail^{™} H or Polytail^{®}HA from Mitsubish Chemical Co., and combinations thereof.

The molecular weight of the polycarbonate polyol is preferably at least 200, more preferably at least 500, up to 5,000, more preferably up to 4,000, and yet more preferable up to 3,000, g/mol. Specific examples of a polycarbonate polyols include the polycarbonate polyols disclosed in European Patent No. EP 3,418,315 B1, the relevant disclosure of which is incorporated herein by reference, and the ETERNACOLL^{™} series of polyols available from Ube Industries, Ltd., Tokyo, Japan, such as ETERNACOLL^{™} UH-100, ETERNACOLL^{™} PH-100 and ETERNACOLL^{™} PH-200. ETERNACOLL^{™} PH-100 and ETERNACOLL^{™} PH-200 are random copolymers made by reacting a dimethyl carbonate polymer with 1,6-hexanediol and 1,5-pentanediol having an average molecular weight of 1,000 g/mol and 2,000 g/mol, respectively. In a preferred embodiment, at least 10, more preferably at least 30, even more preferably at least 50, in some embodiments at least 70, more preferably at least 80, more preferably at least 90, and even more preferably 100, mole% of the diols used to make the prepolymer comprise at least one ester group or at least one carbonate group. In a particularly preferred embodiment, at least 10, more preferably at least 30, even more preferably at least 50, in some embodiments at least 70, more preferably at least 80, more preferably at least 90, and even more preferably 100, mole% of the diols used to make the prepolymer comprise at carbonate group.

In a preferred embodiment, the polyol compounds used to make the respective prepolymers may be represented by formula (A) or (B):

HO-[-X¹-C(O)-O-]ₜ-X-[-O-C(O)-X²-]ᵤ-OH (A)

HO-[-Y¹-O-C(O)-O-]v-Y-[-O-C(O)-O-Y²-]_{w}-OH (B)

wherein X, X¹, X², Y, Y¹ and Y² each independently represents an organic linking group and t, u, v, and w each independently represents zero or a positive integer, wherein the sum of t + u and the sum of v + w each has a value of at least 1, preferably at least 2, and more preferably at least 4, and preferably up to 10, more preferably up to 8 and even more preferably up to 6. In a preferred embodiment, t, u, v and w each independently represents a positive integer, wherein the positive integer is preferably at least 1, more preferably at least 2, and preferably up to 5, more preferably up to 4, and even more preferably up to 3.

Each of the organic linking groups X, X¹, X², Y, Y¹ and Y² preferably comprises an aliphatic, cycloaliphatic or aromatic group, or a polyether comprising one or more aliphatic, cycloaliphatic or aromatic groups. The aliphatic group preferably has at least 2, more preferably at least 4, up to 8, more preferably up to 6, and even more preferably up to 5, and even more preferably 2, 3, or 4, carbon atoms in the main chain and has from zero up to 8, more preferably up to 6, and even more preferably up to 5, methyl group substituents. The cycloaliphatic group preferably has at least 4, more preferably at least 5, up to 12, more preferably up to 9, and even more preferably up to 6, carbon atoms in one or more cycloaliphatic rings, wherein the cycloaliphatic group may be monocyclic or a polycyclic ring system, wherein the polycyclic ring system is preferably a fused ring system or a bridged ring system, and wherein each ring member of the cycloaliphatic group may be unsubstituted or substituted with one or two methyl groups per carbon atom . The aromatic group preferably has at least 6, up to 14, more preferable up to 10, carbon atoms in one or more aromatic rings, wherein the aromatic group may be monocyclic or a polycyclic ring system, wherein the polycyclic ring system may be a fused ring system, a bridged ring system or a pair of the aforementioned aromatic rings connected by a methylene group or an aliphatic group. In a preferred embodiment, X, X¹, X², Y, Y¹ or Y² each independently represents an aliphatic group or a cycloaliphatic group. In a more preferred embodiment, each X, X¹, X², Y, Y¹ and Y² independently represents an aliphatic group or a cycloaliphatic group.

In a particularly preferred embodiment, each X¹, X² and/or each Y¹ and Y² independently represents an unsubstituted or substituted aliphatic group having at least 4, up to 6, more preferably up to 5, carbon atoms in the main chain and having from zero up to 6, more preferably up to 5, methyl group substituents.

The prepolymers may further comprise other organic linking groups, such as polyether polyols. Examples of polyether polyols include, but are not limited to, those obtained by polymerization of an oxide such as ethylene oxide, propylene oxide, or butylene oxide from an initiator such as glycerol, di-propylene glycol, TPG (tripropylene glycol), castor oil, sucrose, or sorbitol. Examples of polyether polyols include polyalkylene oxide polyether polyols synthesized through the self-polymerization of oxiranes such as propylene oxide (an addition reaction) that is initiated by a polyol with low molecular weight, such as glycerol. Examples include polypropylene glycol and polytetramethylene glycol.

Preferably less than 30, more preferably less than 20, and even more preferably less than 10, mol-percent of the polyols used to make the prepolymers comprise organic linking groups comprising an ether group. In a more preferred embodiment, less than 30, more preferably less than 20, and even more preferably less than 10, mol-percent of the polyols used to make the prepolymers comprise organic linking groups other than organic linking groups comprising ester groups and carbonate groups.

Preferred polyisocyanate prepolymers may be represented by the formula (I):

T(N=C=O)m (I),

wherein m is an integer equal to 2 or 3, and is preferably equal to to 2, and preferred polyol prepolymers may be represented by the formula (II):

   U(OH)ₙ (II)
wherein n is an integer having a value in the range from 2 to 5, and is preferably equal to 2, and
wherein each of T and U independently represents a copolymer chain comprising the units A and D, wherein A is a unit derived from the aforementioned polyisocyanate compound and D is a unit derived from the aforementioned polyol compound or oligomer thereof.

In a preferred embodiment, each of T and U independently represents a copolymer chain comprising the copolymer units represented by Formula (III):

-[-C(O)-NH-R-NH-C(O)-D-]ₚ- (III)

wherein R represents an organic linking group and D has the same meaning as defined above. In a preferred embodiment, D represents a unit derived from a polyol compound, or oligomer thereof, comprising at least one, preferably at least two, ester groups or comprising at least one, preferably at least two, carbonate groups. In a preferred embodiment, D represents a unit comprising at least one moiety corresponding to -X¹-C(O)-O- or -Y¹-O-C(O)-O-, wherein X¹ and Y¹ each independently represents an organic linking group as defined above, including the preferred meanings thereof.

In a preferred embodiment, D represents one or more units derived from a polyol compound represented by the formula (IV) or (V):

-[-O-[-X¹-C(O)-O-]ₜ-X-[-O-C(O)-X²-]ᵤ-O-]- (IV)

-[-O-[-Y¹-O-C(O)-O-]ᵥ-Y-[-O-C(O)-O-Y²-]_{w}-O-]- (V)

wherein X, X¹, X², Y, Y¹, Y², t, u, v, and w each independently have the same meaning, including the preferred meaning, in formulae (IV) and (V) as defined above in formula (A) and (B), respectively.

Preferred organic linking groups R of Formula (III) are groups comprising substituted or unsubstituted aromatic rings, cycloaliphatic rings, unsaturated cyclic ketones, aliphatic groups, and combinations thereof, wherein preferred substituents include methyl groups. Preferred aromatic rings include monocyclic and polycyclic rings. Examples of hydrocarbyl linking groups include methylene diphenyl, tolylene, hexamethylene, methylene biscyclohexyl, isophorone, naphthalene, biphenylene, polymethylene polyphenyl, xylylene, cyclohexane, and polyisocyanates comprising the aforementioned R groups linked with each other through amide groups.

The subscript p of Formula (III) represents an integer having a value of at least 1, preferably at least 2, and preferably up to 8, more preferably up to 5.

In a preferred embodiment, at least one of the polyisocyanate prepolymers of Formula (I) and the at least one of the polyol prepolymers of Formula (II) has a copolymer chain comprising at least one, preferably more than one, copolymer unit of Formula (III) in which D represents an oligomer comprising at least one, preferably more than one, carbonate group. In the same or another preferred embodiment, at least one of the at least one polyisocyanate prepolymer of Formula (I) and the at least one polyol prepolymer of Formula (II) has a copolymer chain comprising at least one, preferably more than one, copolymer unit of formula (III), wherein D represents an oligomer comprising at least one an ester group. In a preferred embodiment, the at least one polyisocyanate prepolymer of Formula (I) has a copolymer chain comprising a unit of Formula (III) in which D represents an oligomer comprising a carbonate group and the at least one polyol prepolymer of Formula (II) has a copolymer chain comprising a unit of Formula (III) in which D represents an oligomer comprising an ester group. In another preferred embodiment, the at least one polyisocyanate prepolymer of Formula (I) has a copolymer chain comprising a unit of Formula (III) in which D represents an oligomer comprising an ester group and the at least one polyol prepolymer of Formula (II) has a copolymer chain comprising a unit of Formula (III) in which D represents an oligomer comprising a carbonate group.

In a preferred embodiment, at least one polyisocyanate prepolymer of Formula (I) or at least one polyol prepolymer of Formula (II) has a copolymer chain comprising at least 2, preferably at least 3, ester groups or at least 2, preferably at least 3, carbonate groups. In a more preferred embodiment, at least one polyisocyanate prepolymer of Formula (I) and at least one polyol prepolymer of Formula (II) has a copolymer chain comprising at least 2, preferably at least 3, ester groups or at least 2, preferably at least 3, carbonate groups.

In a preferred embodiment, the polyisocyanate prepolymer may be represented by Formulae (Ia) and (Ib):

(O=C=N)-R-NH-C(O)-D-C(O)-NH-R-(N=C=O) (Ia)

(O=C=N)-R-NH-C(O)-D-C(O)-NH-R-NH-C(O)-D-C(O)-NH-R-(N=C=O) (Ib)

and the polyol prepolymers may be represented by the Formulae (IIa) and/or (IIb):

H-D-C(O)-NH-R-NH-C(O)-D-H (IIa)

H-D-C(O)-NH-R-NH-C(O)-D-C(O)-NH-R-NH-C(O)-D-H (IIb),

wherein each D and R independently has the same meaning, including the preferred meanings, as defined above in Formula (III).

### Third reactive component

The third reactive component comprises at least one polyol compound having less than two, preferably no, urethane groups per molecule. The polyol compounds have (a) at least 1, preferably at least 2, more preferably at least 3, and even more preferably at least 6, preferably up to 12, more preferably up to 9, and even more preferably up to 6, ester groups and at least 3, preferably up to 5, more preferably up to 4, and even more preferably 3, hydroxy end groups or (b) have at least 1, more preferably at least 2, even more preferably at least 3, yet more preferably at least 6, preferably up to 12, more preferably up to 9, even more preferably up to 6, carbonate groups and at least 2, more preferably at least 3, preferably up to 5, more preferably up to 4, and even more preferably 3, hydroxy groups. The hydroxy groups are preferably primary or secondary alcoholic hydroxy groups. They are preferably selected from compounds having terminal hydroxyl groups. They preferably comprise an organic group, such as an aliphatic group, a cycloaliphatic group or an aromatic group, and/or one or more polyether groups comprising one or more of the aforementioned organic groups. The organic group preferably does not contain reactive double bonds.

The polyol compounds of the third reactive component preferably have a theoretical molecular weight greater than 200 g/mol and preferably have a theoretical molecular weight that is less than the theoretical molecular weight of the polyol prepolymers. The at least one polyol compound preferably has a molecular weight of at least 200, more preferably at least 300, even more preferably at least 500, and even more preferably at least 800, up to 3,500, more preferably up to 3,000, more preferably up to 2,500, and in some embodiments even more preferably up to 1,500, g/mol or Daltons. The ratio of the theoretical molecular weight of the polyol to the theoretical molecular weight of the polyisocyanate prepolymer is preferably less than 1:1, more preferably less than 0.7:1 and is preferably at least 0.5:1. The ratio of the molecular weight of the polyol compound to the molecular weight of the polyol prepolymer is preferably less than 1:1, more preferably less than 0.7:1 and is preferably at least 0.05:1.

The at least one polyol compound of the third reactive component in bulk preferably has a weight-average molecular weight of at least 200, more preferably at least 300, even more preferably at least 500, and even more preferably at least 800, up to 3,500, more preferably up to 2,500, and even more preferably up to 1,500, g/mol or Daltons. The ratio of the weight-average molecular weight of the polyol to the weight-average molecular weight of the polyisocyanate prepolymer is preferably less than 1:1, more preferably less than 0.7:1 and is preferably at least 0.5:1. The ratio of the weight-average molecular weight of the polyol compound to the weight-average molecular weight of the polyol prepolymer is preferably less than 1:1, more preferably less than 0.7:1 and is preferably at least 0.05:1.

The at least one polyol compound of the third reactive component in bulk preferably has a number-average molecular weight of at least 200, more preferably at least 300, even more preferably at least 500, and even more preferably at least 800, up to 3,500, more preferably up to 2,500, and even more preferably up to 1,500, g/mol or Daltons. The ratio of the number-average molecular weight of the polyol to the number-average molecular weight of the polyisocyanate prepolymer is preferably less than 1:1, more preferably less than 0.7:1 and is preferably at least 0.5:1. The ratio of the number-average molecular weight of the polyol compound to the number-average molecular weight of the polyol prepolymer is preferably less than 1:1, more preferably less than 0.7:1 and is preferably at least 0.05:1.

Preferred polyol compounds of the third reactive component having at least two hydroxy groups and comprising at least one carbonate group per molecule include the polycarbonate polyols used to make the prepolymers disclosed above, including the preferred embodiments thereof. The polyol compounds also may further comprise diol compounds that may be used as chain extenders, which preferably comprise an aliphatic or cycloaliphatic group having two primary or secondary alcohol groups. The ratio of equivalents of the total amount of polyol compounds having two hydroxy groups to the equivalents of the total amount of the polyol compounds having at least three hydroxy groups is preferably less than 0.1 to 1, more preferably less than 0.07:1, even more preferably less than 0.06:1.

In a preferred embodiment, the at least one polyol compound of the third reactive component is an oligomer having at least three hydroxy groups. In a preferred embodiment, the polyol compound having at least three hydroxy groups comprises a carbon atom having three or four substituents, wherein each substituent comprises at least one methylene group and at least one terminal hydroxy group. Each substituent preferably comprises an organic group, such as an aliphatic group, a cycloaliphatic group or an aromatic group, and/or one or more polyether groups comprising one or more of the aforementioned organic groups.

The polyol compounds of the third reactive component may be polyester polyols having three or more hydroxy groups. Polyester polyols may be obtained by condensation of one or more acids, or their anhydrides, and one or more compounds having at least three primary or secondary hydroxy groups.

The polyol compounds of the third reactive component may be polycarbonate polyols having three or more hydroxy groups. Polyester polyols may be obtained by condensation of one or more acids, or their anhydrides, and one or more compounds having at least three primary or secondary hydroxy groups.

In a preferred embodiment, the at least one polyol of the third reactive component comprises a carbon atom having two, preferably at least three, or more substituents, wherein at least one, preferably at least two, more preferably at least three, and even more preferably all, of the substituents comprises at least one methylene group and at least one terminal hydroxy group and one or more ester groups and/or one or more carbonate groups. In a particularly preferred embodiment, at least one, preferably at least two, more preferably at least three, and even more preferably all, of the substituents comprise one or more ester groups, one or more carbonate groups or a combination of one or more ester groups and one or more carbonate groups. In a preferred aspect of this embodiment, the ester group and/or the carbonate group comprises an aliphatic group or a cycloaliphatic group.

The aliphatic group has at least 2, more preferably at least 4, up to 8, more preferably up to 6, and even more preferably up to 5, carbon atoms in the main chain and has from zero up to 8, more preferably up to 6, and even more preferably up to 5, methyl group substituents, and the cycloaliphatic group preferably has at least 4, more preferably at least 5, up to 12, more preferably up to 9, and even more preferably up to 6, carbon atoms in one or more cycloaliphatic rings, wherein the cycloaliphatic group may be monocyclic or a polycyclic ring system, wherein the polycyclic ring system is preferably a fused ring system or a bridged ring system, and wherein each ring member of the cycloaliphatic group may be unsubstituted or substituted with one or two methyl groups per carbon atom .

In a preferred embodiment, the polyol compound of the third reactive component comprises multiple ester and/or carbonate groups. In a preferred embodiment, the polyol compound comprises polyesters and/or polycarbonates. In a particularly preferred embodiment, the polyol compounds are selected from polyester polyols, polycarbonate polyols and a mixture of polyester polyols and polycarbonate polyols.

Aliphatic or cycloaliphatic polycarbonate polyol compounds can be obtained by copolymerization of carbon dioxide and epoxides to produce polycarbonate polyol compounds using a polymerization system which includes 1) a metal complex as a transesterification catalyst and 2) a chain transfer agent or initiator having a plurality of sites capable of initiating polymer chains, such as disclosed in WO 2010/028362 A1, which is hereby incorporated herein by reference for its relevant disclosure. The chain transfer/initiating agent is preferably an aliphatic polyol.

Chain transfer/initiating agents having three or more hydroxy groups may be used to obtain polycarbonate polyol compounds having three or more hydroxy groups. Suitable aliphatic triol chain transfer/initiating agents for making polycarbonate triols include trimethylolethane, trimethylolpropane (TMO, glycerol, 1,2,4-butanetriol, 1,2,6-hexanetriol, tris(2- hydroxyethyl)isocyanurate, hexahydro-1,3,5-tris(hydroxyethyl)-s-triazine, 6- methylheptane-l,3,5-triol, polypropylene oxide triol; and polyester triols.

Aliphatic or cycloaliphatic polycarbonate-tetraols suitable for use as the polyol compound of the third reactive component can be obtained by a transesterification reaction between a polycarbonate and a primary aliphatic tetraol as a chain transfer/initiating agent using the above transesterification method. Examples of suitable tetraols include, but are not limited to erythritol, pentaerythritol, 2,2'-dihydroxymethyl-l, 3 -propanediol, and 2,2'-(oxydimethylene) bis-(2-ethyl-l,3-propanediol).

In a preferred embodiment, aliphatic or cycloaliphatic polycarbonate polyols having a molecular weight of not more than 3,000 g/mol and which are liquid at room temperature may be obtained by a transesterification reaction between an aryl polycarbonate and a mixture of a primary aliphatic triol and two diols by suitable choice of the proportion of triol and the relative proportions of the diols as disclosed in US Patent Publication No. 4,201,720 A, which is hereby incorporated herein by reference for its relevant disclosure.

Examples of preferred polyol compounds of the third reactive component include polyol compounds comprising ester groups and/or carbonate groups described above having at least 2, preferably at least 3, up to 5, more preferably up to 4, and yet more preferably 3, hydroxy groups.

In a preferred embodiment, at least 10, more preferably at least 30, even more preferably at least 50, in some embodiments at least 60, more preferably at least 70, and even more preferably at least 80, mole% of the polyol compound of the third reactive component is derived from polyol compounds comprising at least one ester group or at least one carbonate group.

Preferred polyol compounds of the third reactive component comprising ester groups are polyols derived from one or more lactones, such as valerolactone, butyrolactone, and caprolactone, particularly lactones selected from δ-valerolactone, γ-butyrolactone, ε-caprolactone, ε-methyl-ε-caprolactone and ξ-enantholactone and polymers and copolymers thereof. In a preferred embodiment, the ester groups are caprolactones such as ε-caprolactone and ε-methyl-ε-caprolactone, and polymers and copolymers thereof. Examples of preferred polyols derived from lactones are polyol compounds made with one or more lactones, such as the aforementioned preferred lactones, such as by reacting the lactone monomer with an initiator that has at least three active hydrogen groups, such as trimethylolpropane (TMP). Manufacture of such polyols is known, such as disclosed in US Patent No. 6,632,913, which is hereby incorporated herein for its relevant disclosure. Examples of preferred polycaprolactone triols include Placcel^{™} E2390 and Placcel^{™} E2394, which are available from Daicel Corp., Tokyo, Japan. Placcel^{™} E2394 reportedly has an average molecular weight of 1,000 g/mol.

Preferred polyol compounds of the third reactive component comprising carbonate groups include the polycarbonate polyols disclosed in European Patent No. 3,418,315 B1, the relevant disclosure of which is hereby incorporated herein by reference, and the ETERNACOLL^{™} series of polyols available from Ube Industries, Ltd., Tokyo, Japan, such as ETERNACOLL^{™} UH-100, ETERNACOLL^{™} PH-100 and ETERNACOLL^{™} PH-200 described above.

In a preferred embodiment, the polyol compound of the third reactive component comprises at least one of the following units:

-X¹-C(O)-O- or

-Y¹-O-C(O)-O-,

wherein X¹ and Y¹ each independently have the same meanings, including the preferred meanings as defined above in reference to formulae (IV) and (V), respectively.

In a preferred embodiment, the polyol compound of the third reactive component may be represented by the formulae (VI) or (VII):

R¹([-O-C(O)-X¹]ₜ-OH)ⱼ (VI) or

R²([-O-C(O)-Y¹]ᵥ-OH)ₖ (VII) or

wherein X¹, Y¹, t and v have the same meanings as defined above in reference to formulae (IV) and (V), respectively, R¹ and R² each independently represents an organic group, j represents a positive integer having a value of at least 3 and k represents a positive integer having a value of at least 2, preferably at least 3.

The organic group is preferably an aliphatic, cycloaliphatic or aromatic group, or a polyether comprising one or more aliphatic or cycloaliphatic groups. The organic group is preferably an aliphatic group or a cycloaliphatic group, more preferably an aliphatic group. The aliphatic group preferably has at least 2 up to 8, more preferably up to 6, and even more preferably up to 5, and even more preferably 2, 3, or 4, carbon atoms in the main chain and has from zero up to 4, more preferably up to 3, and even more preferably up to 2, methyl group substituents. The cycloaliphatic group preferably has at least 4, more preferably at least 5, up to 12, more preferably up to 9, and even more preferably up to 6, carbon atoms in one or more cycloaliphatic rings, wherein the cycloaliphatic group may be monocyclic or a polycyclic ring system, wherein the polycyclic ring system is preferably a fused ring system or a bridged ring system, and wherein each ring member of the cycloaliphatic group may be unsubstituted or substituted with one or two methyl groups per carbon atom .

In a preferred embodiment, the polyol compounds may be represented by the formula

R³C(CH₂-E)₃ (VIII),

wherein R³ has the same meaning as R¹ or R², including the preferred meanings, in formulae (VI) and (VII). R³ preferably represents an aliphatic group preferably having at least 2 up to 4, more preferably 2, carbon atoms. Each E independently represents

-[-O-C(O)-X-C(O)-]ᵣ-OH (Villa)

or

-[-O-C(O)-O-Y-O-C(O)-]ₛ-OH (VIIIb)

wherein
X and each Y each independently have the same meanings, including the preferred meanings, as defined above in reference to formulae (IV) and (V), respectively and
Subscripts r and s each independently represent positive integers having a value of at least 1, more preferably at least 2, and preferably up to 5, more preferably up to 4, and even more preferably up to 3. In a preferred embodiment, r and s are each independently selected from the value 1 or 2.

### Additional components

The system, method, kit of parts and reactive composition according to this invention may comprise additional components. Examples of additional components are amine chain extenders, additional prepolymers, components which facilitate the reaction between the first reactive component and the second reactive component, such as additional chain extenders, additional crosslinking agents, additional polyisocyanate compounds, catalysts, components that modify or enhance mixing or extrusion of the reaction mixture, such as wetting agents, defoaming agents, viscosity modifiers, surfactants, and processing aids, and components which modify or enhance the properties or appearance of the thermoset polyurethane material made by the system and method according to this invention, such as fillers, UV absorbers, hindered amine light stabilizers, optical brighteners, and coloring agents. The additional components may be incorporated into one or more of the above-specified reactive components to the extent that they do not react with the materials in the selected reactive component prior to the mixing step or they may be introduced into the mixing step separately. Additional components capable of reacting with polyol groups are preferably combined with the first reactive component to form a composition which is introduced into the mixer for mixing with the second reactive composition prior to printing. Additional components capable of reacting with isocyanate groups are preferably combined with the second reactive component to form a composition which is introduced into the mixer for mixing with the first reactive composition prior to printing.

### Amine compounds having primary or secondary amine groups

Amine compounds having primary or secondary amine groups include diamine and hydroxyamine chain extenders. Chain extenders are compounds that are used in the synthesis of polyurethanes to increase the length of the hard segments, increase hydrogen bonding, and tailor the molecular weight. They typically have a preferred molecular weight of less than 500 g/mol. The primary and secondary amine groups react with isocyanates to form urea linkages.

Examples of preferred amine compounds having primary or secondary amine groups include aromatic diamines, aliphatic diamines and oligomeric polyether amines. Preferred aromatic amines include aromatic diamines such as 1,2-diphenyl hydrazine, which is commercially available from Sigma-Aldrich, diethyl toluene diamine (DETDA), which is commercially available as Ethacure^{™} E100, and dimethyl thio-toluene diamine (DMTDA), which is commercially available as Ethacure^{™} E300. Ethacure^{™} 100 and Ethacure^{™} 300 are availabe from Albemarle Corporation, Charlotte, North Carolina, USA. Preferred aliphatic diamines include Clearlink^{™} 1000 available from Dorf Ketal LLC, Houston, Texas, USA. Preferred oligomeric polyether amines include those commercially available under the trademarks Jeffamine^{™} and Versalink^{™}.

The amine compounds may be combined with the second reactive component and/or with the third reactive component prior to reacting the first reactive component with the second reactive component and the third reactive component, such as by admixing the amine compound(s) with the second reactive component and/or with the third reactive component, or such amine compound(s) may be introduced into the mixer separately. The ratio of equivalents of the total amount of such amine compounds to the equivalents of the total amount of the polyol compounds used in the system, method, kit of parts and/or extrudable partially reacted co-reactive composition is preferably less than 1 to 1, more preferably less than 0.5:1, and even more preferably less than 0.4:1 and preferably at least 0.01:1, and more preferably at least 0.05:1.

### Low molecular weight diol chain extenders

Diol compounds that may be used as low molecular weight chain extenders preferably comprise an aliphatic or cycloaliphatic group having two or more primary or secondary alcohol groups. The low molecular weight diol chain extender compounds may comprise ether groups, ester groups and/or carbonate groups described above having two hydroxy groups per molecule, provided that their molecular weight is preferably less than 500 g/mol, more preferably less than 200 g/mol, particularly when the diol chain extender compounds comprise carbonate groups, or the diol chain extender compounds preferably do not comprise a carbonate moiety. Preferred diol chain extenders include 1,3-butanediol and 1,4-butanediol (BDO).

Diol chain extenders may be included as a further component in the second reactive component or in the third reactive component by admixing the diol with the second reactive component and/or the third reactive component, or such diols may be introduced into the mixer separately. The diol chain extenders react with isocyanates to form urethane linkages. The ratio of equivalents of the total amount of such low-molecular weight diol chain extenders to the equivalents of the total amount of the above-described polyol compound is preferably less than 0.1 to 1, more preferably less than 0.05:1, even more preferably less than 0.02:1 and yet more preferably less than 0.01:1.

### Cross-Linking Agents

The system, method, kit of parts and extrudable formulation may preferably further comprise crosslinking agents in addition to polyol compounds having at least three hydroxy groups. Crosslinking agents are compounds having more than two functional groups per molecule which are capable of reacting with the isocyanate groups of the polyisocyanate prepolymer, or alternatively with the hydroxy groups of the polyol prepolymer, to form a three-dimensionally interconnected polymer network.

In a preferred embodiment, the cross-linking agents have functional groups capable of reacting with the isocyanate groups of the polyisocyanate prepolymer. Preferred functional groups are primary and secondary amine groups and primary or secondary hydroxy groups. In a preferred embodiment, the cross-linking agent is a compound other than the polyol compound having three or more hydroxy groups.

When the crosslinking agent is a polyol compound having at least three hydroxy groups, the polyol compound preferably has a molecular weight less than 500 g/mol, more preferably less than 300 g/mo, more preferably less than 200 g/mol, and yet more preferably less than 180 g/mol or preferably does not comprise an ester moiety or a carbonate moiety. An example of a preferred polyol crosslinking agent is trimethylolpropane (TMP).

### Isocyanate Compounds

The system, method, kit of parts and extrudable formulation may preferably further comprise at least one isocyanate compound other than the polyisocyanate prepolymers. The at least one isocyanate compound is preferably selected from among one or more polyisocyanate compounds disclosed above for making the prepolymers. In a more preferred embodiment, the at least one isocyanate compound correspond(s) to the polyisocyanate compounds used to make the the polyisocyanate prepolymer. Further examples include prepolymeric isocyanate components, such as aromatic isocyanates based on polymeric methylene diphenyl diisocyanates such as Desmodur^{™}, Rubinate^{™}, and isophorone diisocyanate. The isocyanate compounds are preferably present in, and preferably admixed with, the first reactive component.

### Catalysts

The system, method, kit of parts and extrudable formulation may preferably further comprise at least one catalyst comprising zirconium, bismuth, tin, zinc or an amine, or a combination of two or more of zirconium, bismuth, tin, and zinc. An example of a suitable catalyst is K-KAT XK-618, which is a mixed organometallic complex catalyst available from King Industries of Norwalk, Connecticut, USA. Catalysts are preferably incorporated into a composition comprising the second reactive component or the third reactive component.

### Defoamers and Air Release Additives

The system, method, kit of parts and extrudable formulation may further comprise defoamers and air release additives. Defoamers and air release agents prevent and destroy foam bubbles and enable an improved processing and improved thermoset product properties, such as improved surface properties.

Polymethylalkylsiloxane may be added to reduce surface tension and thereby increase substrate wetting. Examples of such additives include BYK-085 nd BYK-378 commercially available from Byk-Chemie GmbH in Wesel, Germany, and TEGO^{®} Airex 990 available from Evonik Industries.

Silicone-free defoaming additives include polyacrylate-based and other polymer-based defoamers, which not only provide increased substrate wetting, but can also be used as anti-cratering and leveling additives. Examples include Efka^{™} PB 2770 available from BASF; BYK-1790 and BYK-361N are available from Byk-Chemie GmbH in Wesel, Germany; and DYNOL^{™} 360 and SURFYNOL^{™} 104 available from Evonik Industries.

### Light stabilizers

The system, method, kit of parts and extrudable formulation may also comprise a light stabilizer, such as a hindered amine light stabilizer. An example of a hindered amine light stabilizer is Tinuvin^{™} 765, which is a mixture ofbis(1,2,2,6,6-pentamethyl-4-piperidyl)sebacate and methyl-1,2,2,6,6-pentamethyl-4-piperidyl sebacate available from BASF Scheiz AG, Basel, Switzerland.

### Antioxidants

The system, method, kit of parts and extrudable formulation may also comprise an antioxidant, such as a sterically hindered phenolic compound, as a stabilizer. An example of such an antioxidant is Irganox^{™} 1135, which is a mixture of benzenepropanoic acid, 3,5-bis (1,1-dimethyl-ethyl)-4-hydroxy-C₇-C₉ branched alkyl esters available from BASF Schweiz AG, Basel, Switzerland.

Suitable antioxidants also include EVEROX^{™} 501, which is available from Everlight Chemical, which is headquartered in Taipei, Taiwan.

### Dyes and/or pigments

The system, method, kit of parts and extrudable formulation may further comprise one or more dyes and/or pigments. An example of a suitable dye is Reactint^{©} Blue X17AB available from Milliken, Spartanburg, South Carolina, USA. An example of a suitable pigment is UVO Black available from Smooth-On, Inc., of Macungie, Pennsylvania, which is a carbon black dispersion.

### Preferred formulations

In a preferred embodiment, at least 20, more preferably at least 30, even more preferably at least 35, yet more preferably at least 40, weight-percent up to 80, more preferably up to 70, and even more preferably up to 65, weight-percent of the total amount of components in a given formulation have isocyanate-reactive groups.

In a preferred embodiment, at least two, and more preferably each, of the polyisocyanate prepolymer, the polyol prepolymer and the polyol compound comprises one or more ester groups, one or more carbonate groups, or both ester groups and carbonate groups. In a preferred embodiment, each of the at least one polyol prepolymer and the at least one polyol compound comprises one or more ester groups, one or more carbonate groups, or both ester groups and carbonate groups.

In a more preferred embodiment, the ester groups are derived from lactone groups, and even more preferably are derived from caprolactone groups.

In the same or another preferred embodiment, the polyisocyanate prepolymer and the polyol prepolymer each independently comprises one or more ester groups or one or more carbonate groups. In the same or different preferred embodiment, the polyisocyanate prepolymer comprises carbonate groups and, in a preferred embodiment, the polyisocyanate prepolymer comprises a polycarbonate moiety. In the same or different preferred embodiment, the polyol prepolymer comprises ester groups and, in a preferred embodiment, the polyol prepolymer comprises a polyester moiety, which is preferably a polylactone moiety.

In the same or different embodiment, the polyol compound comprises (a) an ester moiety, which is preferably a polyester polyol, which is preferably a polylactone moiety, or (b) a carbonate moiety, which preferably comprises a polycarbonate moiety.

In the same or different embodiment, the systems, methods, kits and formulations preferably comprise at least one of the above-described amine compounds, including the preferred amine compounds, as a fourth reactive component. At least one of the above-described amine compounds is preferably present in admixture with second reactive component and/or the third reactive component prior to mixing the second reactive component and the third reactive component with the first reactive component to form a reaction mixture for printing.

### Preferred methods of use

The above-described formulations are preferably used in a method for printing a three-dimensional object comprising a thermoset polyurethane material comprising:
(a) Mixing the first reactive component, the second reactive component, and the third reactive component to form a partially reacted mixture and
(b) Extruding the partially reacted mixture formed in step (a) through a downwardly oriented passage onto a substrate while causing relative movement between the nozzle and the extruded partially reacted mixture deposited on the substrate to form a three-dimensional object.

The mixing step (a) is preferably carried out by providing a mixer and simultaneously introducing the reactive components into the mixer. The second and third reactive components are preferably introduced into the mixer as a mixture, or composition, comprising the second and third reactive components. The mixer is connected to a channel or passage for ejecting the mixture from the mixer through the channel or passage.

The mixer can have moving parts or may be a static mixer. For the sake of simplicity and cost savings, static mixers may be used, which generally consist of a tortuous passage designed to intermingle multiple fluid substances passing through the passage until the substances are homogeneously mixed. Static mixers are known and available from Adchem GmbH located in Wendelstein, Germany, and Misch- und Dosiertechnik GmbH located in Waldmohr, Germany. Preferred are helix-type static mixers having at least 12 fixed mixing elements and a conical extrusion end.

The reactive components are preferably introduced into the mixer by pumping the first reactive component into the mixer with a first pump separately from the other reactive components while simultaneously pumping the second and third reactive components into the mixer.

The volumetric pumping rates of the respective pumps are preferably adjusted, or controlled, to obtain a desired ratio of equivalents between the functional groups of the respective reactive components. The desired ratio of equivalents of the reactive functional groups of the first reactive component to the equivalents of the reactive functional groups of the reactive components capable of reacting with the isocyanate groups is preferably in the range from 1:1 and, in some embodiments, more preferably from 1.01:1, and more preferably from 1.05:1, up to 1.2:1

The ratio of equivalents is preferably adjusted, or controlled, to provide an excess, preferably a slight excess, of isocyanate groups of the polyol prepolymer relative to the functional groups of the other components that are capable of reacting with the terminal isocyanate groups to ensure that substantially all the functional groups capable of reacting with the reactive isocyanate groups of the polyisocyanate prepolymer will be reacted with the isocyanate groups during the reaction. The slight excess of isocyanate groups will continue to react with moisture, such as moisture in the air, to complete the curing.

The total combined flow rate of the first pump and the second pump is preferably adjusted, or controlled, to produce a desired flow rate of the partially reacted mixture through the channel for carrying out extruding step (b). The flow rate is preferably adjusted, or controlled, to provide a desired residence time of the reactants in the mixer prior to extrusion, which in turn determines the extent to which the reactive components have reacted with each other prior to extrusion. The residence time is selected to be less than the time required to completely react all the reactive functional groups capable of reacting with isocyanate groups of the at least one polyisocyanate.

Pumps for pumping viscous formulations containing prepolymers and other components at controlled rates are well-known and commercially available from manufacturers such as ViscoTec Pumpen- u. Dosiertechnik GmbH located in Toeging am Inn, Germany.

Preferred channels for extrusion of the partially-reacted thermoset material formed in the mixer include tubes and nozzles having a selected size and shape. In some embodiments, the channels have a substantially constant inner circumference from the upper end to the lower end. In other embodiments, the channel may have a smaller circumference at the lower end than at the upper end including, but not limited to, a nozzle having a conical shape. The passage may be an integral part of the mixer or may be connected with the mixer as a separate component.

### Properties achievable with the preferred embodiments

The systems, methods, kits and formulations of this invention are preferably used to make a thermoset material having a low compression set, such as less than 50, more preferably less than 41, and even more preferably less than 36, percent measured according to ASTM D395, Method B, at 100°C under 25% deflection for 22 hours or, in some embodiments, preferably for 70 hours.

The systems, methods, kits and formulations of this invention are preferably also used to make a thermoset material having a Shore A hardness of at least 57 and, in some embodiments, more preferably at least 65, more preferably at least 75, and even more preferably at least 85.

The systems, methods, kits and formulations of this invention are preferably also used to make a thermoset material having a modulus of elasticity that is preferably at least 0.01 GPa and preferably up to 0.1 GPa, more preferably up to 0.05 GPa.

The systems, methods, kits and formulations of this invention are preferably also used to make thermoset material having a high resistivity to degradation or deterioration due to hydrolysis, exposure to chemicals and/or solvents and/or harsh conditions such as elevated temperatures.

The present invention is illustrated by the following examples.

### EXAMPLES

### Synthesis of polyisocyanate prepolymers

### Polyisocyanate prepolymer 1

Lupranate M (328.6 grams) was heated in the reaction vessel to 80° C. 4-nitrobenzoyl chloride(0.07 grams) was added to the reactor followed by phosphoric acid (0.04 grams). Placcel 220N (451.0 grams) was added while maintaining the reaction temperature between 80°C and 85° C. Reaction vessel was maintained at 80°C for 8 hours and then 1,4-butanediol (BDO) (10.7 grams) was added. After 25 hours, Lupranate MI (210.1 grams) was added, and the reaction mixture was held for two hours. The reaction mixture was stirred and blanketed with nitrogen gas throughout the entire reaction time period. At the end of the reaction, the mixture was cooled and poured into a storage container while blanketed under nitrogen gas.

The resulting isocyanate / polycaprolactone/BDO prepolymer was derived from 45.1 wt.-% Placcel^{™} 210N, 32.9 wt.-% Lupranate^{™} M, 21.0 wt.-% Lupranate^{™} MI, and 1.10 wt.-% BDO and had a (wt./wt.) %NCO = 15.2.

### Polyisocyanate prepolymer 2

Lupranate M (275.3 grams) was heated in the reaction vessel to 80° C. 4-nitrobenzoyl chloride(0.05 grams) was added to the reactor followed by phosphoric acid (0.01 grams). Placcel 210N (285.7 grams) was added over a time period of two hours while maintaining the reaction temperature between 80 and 85° C. The reaction vessel was maintained at 80° C. for an additional two hours. The reaction mixture was stirred and blanketed with nitrogen gas throughout the entire reaction time period. At the end of the reaction, the mixture was cooled and poured into a storage container while blanketed under nitrogen gas.

The resulting isocyanate / polycaprolactone prepolymer was derived from 50.9 wt.-% Placcel^{™} 210N and 49.1 wt.-% Lupranate^{™} M and had a (wt./wt.) %NCO = 12.2.

### Polyisocyanate prepolymer 3

Lupranate M (687.1 grams) was heated in the reaction vessel to 80° C. 4-nitrobenzoyl chloride(0.13 grams) was added to the reactor followed by phosphoric acid (0.03 grams). ETERNACOLL^{™} PH-100 (712.9 grams) was added over a time period of two hours while maintaining the reaction temperature between 80 and 85° C. The reaction vessel was maintained at 80°C for an additional two hours. Reaction mixture was stirred and blanketed with nitrogen gas throughout the entire reaction time period. At the end of the reaction, the mixture was cooled and poured into a storage container while blanketed under nitrogen gas.

The resulting isocyanate / polycarbonate prepolymer was derived from 50.9 wt.-% ETERNACOLL^{™} PH-100 and 49.1 wt.-% Lupranate^{™} M and had a (wt./wt.) %NCO = 12.2.

### Polyisocyanate prepolymer 4

Lupranate^{™} M (490.8 grams) was heated in the reaction vessel to 80°C. 4-nitrobenzoyl chloride(0.02 grams) was added to the reactor followed by phosphoric acid (0.015 grams). 254.6 grams Placcel^{™} 210N and 254.6 grams ETERNACOLL^{™} PH-100 were added over a time period of two hours while maintaining the reaction temperature between 80 and 85° C. The reaction vessel was maintained at 80° C for an additional two hours. The reaction mixture was stirred and blanketed with nitrogen gas throughout the entire reaction time period. At the end of the reaction, the mixture was cooled and poured into a storage container while blanketed under nitrogen gas.

The resulting isocyanate / polycarbonate/ polycaprolactone prepolymer was derived from 25.45 wt.-% Placcel^{™} 210N, 25.45 wt.-% ETERNACOLL^{™} PH-100 and 49.1 wt.-% Lupranate^{™} M and had a (wt./wt.) %NCO = 12.2.

### Polyisocyanate prepolymer 5

Lupranate^{™} M (1963.2 grams) was heated in the reaction vessel to 60° C. 4-nitrobenzoyl chloride(0.08 grams) was added to the reactor followed by phosphoric acid (0.06 grams). ETERNACOLL^{™} PH-100 (2036.8 grams) was added over a time period of two hours while maintaining the reaction temperature between 60 and 70° C. The reaction vessel was maintained at 60° C for an additional hour. The reaction mixture was stirred and blanketed with nitrogen gas throughout the entire reaction time period. At the end of the reaction, the mixture was cooled and poured into a storage container while blanketed under nitrogen gas.

The resulting isocyanate / polycarbonate prepolymer was derived from 50.9 wt.-% ETERNACOLL^{™} PH-100 and 49.1 wt.-% Lupranate^{™} M and had a %NCO = 12.2.

### Polyisocyanate prepolymer 6

86.7 g of melted Lupranate^{™} M was added to a reactor vessel having a one liter capacity with nitrogen gas blanketing and stirring at a temperature maintained at 80°C.

0.0309 g 4-nitrobenzoyl chloride (Millipore-Sigma, Milwaukee, Wisconsin, USA) was added to the reactor followed by 0.022 g phosphoric acid (Millipore-Sigma, Milwaukee, Wisconsin, USA).

329.7 g Placcel^{™} 220N, which was previously melted in an oven with temperature setting of 70 °C, was added to the reactor vessel and the reaction was run for 25.5 hours. 0.94 g of BDO was added to the reactor vessel 10 hours after the additon of Placcel^{™} 220N and the reaction mixture was stirred for 11.25 hours.

29.75 g of Lupranate^{™} MI was added to the reactor and the reactor continued to be mixed under nitrogen gas blanket at 80 °C for 2 hours to yield prepolymer with 5.46 (wt./wt.) % NCO.

### Synthesis of polyol prepolymer

### Polyol prepolymer 1

Placcel^{™} 220N (909.0 grams) was heated to 80° C. 4-nitrobenzoyl chloride (0.08 grams) was added to the reactor followed by phosphoric acid (0.06 grams). Lupranate^{™} MI (90.9 grams) was gradually added over a time period of two hours. After addition of Lupranate^{™} MI was completed, the reaction mixture was held in the reaction vessel for two hours. During the entire reaction time period, the temperature was maintained between 80 and 85° C. The reaction mixture was stirred and blanketed with nitrogen gas throughout the entire reaction time period. At the end of the reaction, the mixture was cooled and poured into a storage container while blanketed under nitrogen gas.

The resulting MDI/ polycaprolactone polyol prepolymer was derived from 90.9 wt.-% Placcel^{™} 220N and 9.10 wt.-% Lupranate MI.

### Polyol prepolymer 2

ETERNACOLL^{™} PH-200 (909.0 grams) was heated to 80° C. 4-nitrobenzoyl chloride (0.14 grams) was added to the reactor followed by phosphoric acid(0.06 grams). Lupranate^{™} MI (90.8 grams) was gradually added over a time period of two hours. After addition of the Lupranate^{™} MI was completed, the reaction mixture was held in the reaction vessel for two hours. During the entire reaction time period, the temperature was held between 80 and 85° C. The reaction mixture was stirred and blanketed with nitrogen gas throughout the entire reaction time period. At the end of the reaction, the mixture was cooled and poured into a storage container while blanketed under nitrogen gas.

The resulting MDI/ polycarbonate polyol prepolymer composition was comprised units derived from 90.9 wt.-% ETERNACOLL^{™} PH-200 and 9.10 wt.-% Lupranate^{™} MI.

### Polyol prepolymer 3

Placcel^{™} 210N (833.5 grams) was heated to 80° C. 4-nitrobenzoyl chloride (0.15 grams) was added to the reactor followed by phosphoric acid (0.10 grams). Lupranate^{™} MI (166.5 grams) was gradually added over a time period of two hours. After the addition Lupranate^{™} MI was completed, the reaction mixture was held in the reaction vessel for two hours. During the entire reaction, the temperature was held between 80 and 85° C. The reaction mixture was stirred and blanketed with nitrogen gas through the entire reaction time period. At the end of the reaction, the mixture was cooled and poured into a storage container while blanketed under nitrogen gas.

The resulting isocyanate/ polycaprolactone polyol prepolymer was derived from 83.35 wt.-% Placcel^{™} 210N and 16.65 wt.-% Lupranate^{™} MI.

### Polyol prepolymer 4

Placcel^{™} 210N (1667.0 grams) was heated to 60° C. 4-nitrobenzoyl chloride (0.30 grams) was added to the reactor followed by phosphoric acid (0.20 grams). Lupranate^{™} M (333.0 grams) was added. The reaction mixture was held in the reaction vessel for 100-120 minutes. During the reaction, the temperature reached 85-90°C. The reaction mixture was stirred and blanketed with nitrogen throughout the reaction time period. At the end of the reaction, the mixture was cooled and poured into a storage container while blanketed under nitrogen gas.

The resulting isocyanate / polycaprolactone polyol prepolymer was derived from 83.35 wt.-% Placcel^{™} 210N and 16.65 wt.-% Lupranate^{™} M.

### Polyol prepolymer 5

227.32 g of Placcel^{™} 220N, which was previously melted in oven with temperature setting of 70 °C, was added to a reactor vessel having a one liter capacity with nitrogen blanketing and stirring at a temperature maintained at 80 °C.

0.0202 g of 4-nitrobenzoyl chloride was added to the reactor vessel followed by 0.0300 g phosphoric acid (Millipore-Sigma, Milwaukee, Wisconsin, USA).

23.55 g of a mixture of 2,4-methylene diphenyl diisocyanate and 4,4'-methylene diphenyl diisocyanate, (Lupranate^{™} MDI-MI) was added to the reactor vessel with nitrogen blanketing and stirring at a temperature maintained at 80 °C. The reaction was run at this temperature with stirring for 8 hours. The reaction yielded a polyol prepolymer composition.

### B-side formulations

Seven formulations were prepared for introducing the polyol prepolymer, the polyol compound, the amine having two primary or secondary amine groups and certain additional components described above into the mixer of a 3D printer as B-side formulations to be reacted with the isocyanate prepolymer (the polyisocyanate prepolymer) introduced into the mixer as the A-side. These formulations are presented in Table 1 below.

**TABLE 1**

| ***B-Side Formulations*** | | | | | | | |
|---|---|---|---|---|---|---|---|
| **B-Side** | **Parts by Weight** | | | | | | |
| **Formulation** | **A** | **B** | **C** | **D** | **E** | **F** | **G** |
| K KAT XK-618 | 1.1 | 1.1 | 1.3 | 1.2 | 1.3 | 1.2 | 1.8 |
| E100 | 2.0 | 4.0 | 4.0 | 4.5 | 5.0 | 4.5 | 7.2 |
| E300 | 15.5 | 16.0 | 12.0 | 7.2 | 8.0 | 7.2 | 0 |
| BDO | 2 | 0 | 4 | 0 | 0 | 0 | 0 |
| TMP | 2 | 0 | 0 | 0 | 0 | 0 | 0 |
| Placcel^{™} E2394 | 48.5 | 45.0 | 0 | 53.3 | 54.4 | 53.3 | 72.3 |
| Placcel^{™} 220N | 0 | 0 | 0 | 0 | 0 | 0 | 0 |
| ETERNACOLL^{™} PH-200 | 0 | 0 | 67.5 | 0 | 0 | 0 | 0 |
| Polyol Prepolymer 1 | 30.0 | 35.0 | 0 | 0 | 32.6 | 0 | 0 |
| Polyol Prepolymer 2 | 0 | 0 | 12.5 | 0 | 0 | 0 | 0 |
| Polyol Prepolymer 3 | 0 | 0 | 0 | 35.0 | 0 | 0 | 0 |
| Polyol Prepolymer 4 | 0 | 0 | 0 | 0 | 0 | 35.0 | 0 |
| Polyol Prepolymer 5 | 0 | 0 | 0 | 0 | 0 | 0 | 40.8 |
| Tinuvin^{™} 765 | 0.2 | 0.2 | 0 | 0.2 | 0.2 | 0.2 | 0.2 |
| Irganox^{™} 1135 | 0 | 0 | 0 | 0 | 0 | 0 | 0.6 |
| Dynol^{™} 360 | 0.5 | 0 | 0 | 0 | 0 | 0 | 0 |
| Byk^{™} 361N | 0 | 1.0 | 0 | 0.5 | 0.5 | 0.5 | 0 |
| Byk^{™} 1790 | 0.2 | 0.1 | 0 | 0.1 | 0.1 | 0.1 | 0 |
| Byk^{™} 085 | 0.2 | 0 | 0.1 | 0 | 0 | 0 | 0 |
| Byk^{™} 378 | 0 | 0 | 0.5 | 0 | 0 | 0 | 0 |
| EVEROX^{™} 501 | 0 | 0 | 1 | 0 | 0 | 0 | 0 |
| pigment | 1 | 0.5 | 0 | 0 | 0 | 0 | 0 |
| Reactint^{™} Blue X17AB | 0 | 0 | 0 | 0 | 0 | 0 | 0.04 |
| **Total parts by weight:** | **103.2** | **102.9** | **102.9** | **102.0** | **102.2** | **102.0** | **122.9** |

### Printing

The polyisocyanate prepolymer and polyol-resin formulations A to G were extruded by pumping the polyisocyanate prepolymer and the polyol resin formulation using a pair of 2K Vipro 5/5 Viscotec pumps connected via conduits to a Sulzer MKH 02-16S static mixer. The polyisocyanate prepolymer was introduced into one pump (the A-side) and one of polyol resin formulations A to G was introduced into the second pump (the B-side). The polyisocyanate prepolymer and each polyol resin formulation A to G were each introduced to the low pressure side of the respective pump using a 600 mL syringe while applying 75 to 100 psi (0.52 to 0.689 MPa) air pressure to the syringe during extrusion of the respective resin to apply continuous pressure on the resin in the syringe in excess of atmospheric pressure.

Unless stated otherwise below, the printing parameters were set as follows:
- Mass output = 0 - 10 g, 3 g target output
- Mass flow rate of 1.8 g/min.
- Height = 1 mm per bead layer
- Bead spacing = 0.8 mm, blend into layer height
- Speed = 2000 mm/min
- Nozzle inner diameter of 0.7mm,

### Post-curing

Post-curing is a process that involves exposing a polyurethane part to elevated temperatures in an oven to speed up and complete the cure of the printed material. Unless stated otherwise below, each printed formulation was post-cured overnight at 80 to 120 °C.

### Methods used to measure physical and mechanical properties of printed materials

### Durometer, tensile and elongation testing

Slabs (60 mm wide x 100 mm long x 2 mm high) were prepared by extruding the A side composition and the B-side composition onto a silicone pad through a mixer tip. The slabs were post-cured overnight at 80 to 120 °C. The slabs were tested for Shore A hardness using standardized test ASTM D2240 type A and they were tested for tensile strength and elongation at break using standardized test ASTM D412.

ASTM D2240 type A is the standard test method for determining the hardness of relatively soft vulcanized rubber and thermoplastic elastomers using a Shore durometer. The Shore durometer is a device that measures the depth of an indentation in the material created by a given force on a standardized presser foot. The depth of the indentation is proportional to the material hardness, also called Shore hardness, its ductility, and the shape of the indentation head.

ASTM D412 is a standard test method used to evaluate the tensile (tension) properties of vulcanized thermoset rubbers and thermoplastic elastomers. The test method involves applying a tensile force to a rubber or elastomer specimen until it breaks, and measuring the force and elongation at various points during the test.

### Compression set testing

Buttons were prepared by extruding the A side composition and the B-side composition through a mixer tip into silicone rubber mold. Buttons were post-cured overnight at 80 to 120 °C. Compression set was measured by applying ASTM D395 Method B Compression Set Fixture to the buttons prepared above. Compression set was measured after 22 hours at 100 °C at a specified deflection.

### Properties of printed formulations

The following examples show the physical and mechanical properties of thermoset slab and button samples made according to the above-described printing and post-curing protocol using various combinations of the polyisocyanate prepolymers and B-side formulations described above in the combinations and proportions shown in the following Table 2.

**TABLE 2**

| **Printing Examples** | | | |
|---|---|---|---|
| Example | A-Side | B-Side | Index |
| 1 | Polyisocyanate prepolymer 1 | A | 1.15 |
| 2 | Polyisocyanate prepolymer 2 | B | 1.15 |
| 3 | Polyisocyanate prepolymer 3 | C | 1.20 |
| 4 | Polyisocyanate prepolymer 4 | D | 1.10 |
| 5 | Polyisocyanate prepolymer 4 | E | 1.10 |
| 6 | Polyisocyanate prepolymer 3 | D | 1.10 |
| 7 | Polyisocyanate prepolymer 3 | E | 1.10 |
| 8 | Polyisocyanate prepolymer 5 | F | 1.05 |

The physical and mechanical properties of Examples 1 to 8 are summarized in the following Table 3.

**TABLE 3**

| **Physical and Mechanical Properties** | | | | | | | | |
|---|---|---|---|---|---|---|---|---|
| **Parameter** | **Ex. 1** | **Ex. 2** | **Ex. 3** | **Ex. 4** | **Ex. 5** | **Ex. 6** | **Ex. 7** | **Ex. 8** |
| Peak stress (MPa) | 44.15 | 39.51 | 37.9 | 30.72 | 31.56 | 27.50 | 29.71 | 38.21 |
| Peak stress (psi) | 6403 | 5730 | 5498 | 4455 | 4577 | 3988 | 4309 | 5542 |
| Strain at break (%) | 311 | 310 | 349 | 282 | 315 | 270 | 257 | 328 |
| Modulus at 100% strain (MPa) | 13.43 | 10.19 | 8.54 | 7.48 | 6.87 | 6.94 | 7.84 | 6.94 |
| Modulus at 100% strain (psi) | 1948 | 1478 | 1239 | 1085 | 996 | 1007 | 1137 | 1007 |
| Shore A hardness | 93 | 94 | 92 | 89 | 86 | 86 | 89 | 91 |
| Compression set B (average %) | 42 | 36 | 62 | 35 | 45 | 41 | 33 | 34 |

### Example 9

Buttons were printed for compression set testing and slabs were printed for durometer, tensile strength and elongation testing using polyisocyanate prepolymer 6 on the A-side and Formulation G in Table 1 on the B-side. The pumping rates for the A-side and the B-side were set to achieve a weight ratio of A-side to B-side of 2.14:1. The A-side and B-side are combined and mixed in the mixer to form a partially reacted mixture which is extruded through a mixer tip as previously described.

### Compression set testing

Buttons were prepared by extruding the partially reacted mixture obtained above into a silicone rubber mold. The buttons were post-cured overnight at 100 °C.

Compression set measured after 22 hours at 70 °C at 33.8% deflection was 14.7%. Compression set measured after 22 hours at 100°C at 33.2% deflection was 35.4%.

### Durometer, tensile and elongation testing

Slabs (60 mm wide x 100 mm long x 2 mm high) were prepared by extruding the above partially reacted mixture onto a silicone pad to form slabs. The slabs were post-cured overnight at 100 °C.

The slabs were tested for Shore A hardness, tensile strength and elongation at break as previously described. The Shore A Durometer of the slabs was 65 + 5 points, the tensile strength of the slabs was 18.4 MPa, and the elongation at break of the slabs was 618%.

## Claims

1. A system for printing a three-dimensional object comprising a thermoset polyurethane material via reactive extrusion comprising:
a mixing chamber for mixing at least two reactive components,
a first pump in fluid communication with the mixing chamber for pumping first reactive component into the mixing chamber,
a second pump in fluid communication with the mixing chamber for pumping a second reactive component into the mixing chamber, and
a downwardly-oriented channel connected with, and in fluid communication with, the mixing chamber for extruding a partially reacted mixture of the first reactive component and the second reactive component,
wherein the system comprises a first reactive component, a second reactive component, and a third reactive component,
wherein
the first reactive component comprises at least one polyisocyanate prepolymer, wherein the first reactive component is provided to the first pump, and
the second reactive component comprises at least one polyol prepolymer, wherein the second reactive composition is provided to the second pump, and
the third reactive component comprises at least one polyol compound, and
the at least one polyisocyanate prepolymer and the at least one polyol prepolymer each independently comprises at least two urethane groups per molecule, and
the at least one polyol compound has, per molecule, less than two urethane groups and (a) at least one ester group and at least three hydroxy groups or (b) at least one carbonate group and at least two hydroxy groups.

2. The system according to claim 1, wherein at least one of the at least one polyisocyanate prepolymer and the at least one polyol prepolymer comprises at least one ester group or at least one carbonate group.

3. The system according to claim 1 or 2, wherein the ester group is selected from aliphatic and cycloaliphatic ester groups and the carbonate group is selected from aliphatic, cycloaliphatic and aromatic carbonate groups.

4. The system according to any one of the preceding claims, wherein the polyol compound comprises a carbon atom having three or more substituents, wherein each substituent comprises at least one methylene group and at least one terminal hydroxy group.

5. A method for printing a three-dimensional object comprising a thermoset polyurethane material via reactive extrusion comprising:
(a) Mixing a first reactive component with a second reactive component and a third reactive component to form a partially reacted mixture and
(b) Extruding the partially reacted mixture formed in step (a) through a downwardly oriented channel onto a substrate while causing relative movement between the nozzle and the extruded partially reacted mixture deposited on the substrate to form a three-dimensional object,
wherein
the first reactive component comprises at least one polyisocyanate prepolymer, and the second reactive component comprises at least one polyol prepolymer, and the third reactive component comprises at least one polyol compound, and
the at least one polyisocyanate prepolymer and the at least one polyol prepolymer each independently comprises at least two urethane groups per molecule and the at least one polyol compound has, per molecule, less than two urethane groups and (a) at least one ester group and at least three hydroxy groups or (b) at least one carbonate group and at least two hydroxy groups.

6. The method according to claim 5, wherein at least one of the at least one polyisocyanate prepolymer and the at least one polyol prepolymer comprises at least one ester group or at least one carbonate group.

7. The method according to claim 5 or 6, wherein the ester group is selected from aliphatic and cycloaliphatic ester groups and the carbonate group is selected from aliphatic, cycloaliphatic and aromatic carbonate groups.

8. The method according to any one of claims 5 to 7, wherein the polyol compound comprises a carbon atom having three or more substituents, wherein each substituent comprises at least one methylene group and at least one terminal hydroxy group.

9. A kit of parts for use in a method for printing a three-dimensional object comprising a thermoset polyurethane material via reactive extrusion according to any one of claims 5 to 8 comprising:
(1) A first container containing a first composition comprising at least one polyisocyanate prepolymer and
(2) A second container containing a second composition comprising (A) at least one polyol prepolymer and (B) at least one polyol compound,
wherein
the at least one polyisocyanate prepolymer and the at least one polyol prepolymer each independently comprises at least two urethane groups per molecule and the at least one polyol compound has, per molecule, less than two urethane groups and (a) at least one ester group and at least three hydroxy groups or (b) at least one carbonate group and at least two hydroxy groups.

10. The kit according to claim 9, wherein the second container further comprises a chain extender comprising at least one primary or secondary amine group.

11. An extrudable partially reacted co-reactive composition suitable for use in the method of any one of claims 5 to 8 in a downwardly oriented channel of a printer for printing a three-dimensional object comprising a thermoset polyurethane material comprising:
(a) at least one polyisocyanate prepolymer;
(b) at least one polyol prepolymer; and
(c) at least one polyol compound;
wherein
the at least one polyisocyanate prepolymer and the at least one polyol prepolymer each independently comprises at least two urethane groups per molecule and the at least one polyol compound has, per molecule, less than two urethane groups and (a) at least one ester group and at least one three hydroxy groups or (b) at least one carbonate group and at least two hydroxy groups.

12. The extrudable partially reacted co-reactive composition according to claim 11 further comprising a chain extender comprising at least one primary or secondary amine group.

13. Use of the extrudable partially-reacted co-reactive composition according to claim 11 or 12 for printing a three-dimensional object.

14. A three-dimensional object made by the method according to any one of claims 5 to 8 comprising a cured polyurethane having ester moieties and carbonate moieties covalently bonded within the cured polyurethane.

15. The three-dimensional object according to claim 14, wherein the cured polyurethane further comprises amine moieties covalently bonded within the cured polyurethane.
